# EUROPEAN PATENT APPLICATION

(11) **EP 0 845 821 A2**
(43) Date of publication of application: **03.06.1998**
(21) Application number: 97309504.5
(22) Date of filing: 25.11.1997
(51) Int. Cl.: H01M 2/02

(54) **Thin type battery with laminated sheathing**

(30) Priority: 28.11.1996 JP 317727/96; 21.11.1997 JP 320989/97
(71) Applicant: SANYO ELECTRIC Co., Ltd., Moriguchi-shi, Osaka 570 (JP)
(72) Inventor: Sonozaki, Tsutomu, Tsuna-gun, Hyogo, 656-21 (JP); Fujii, Takanori, Hyogo, 656 (JP); Nakane, Ikurou, Hyogo, 656 (JP); Teraji, Kazuo, Kyoto, 614 (JP); Narukawa, Satoshi, Hyogo, 656 (JP)
(74) Representative: Hillier, Peter

(57) **Abstract**

The thin type battery mounts the electricity generating element in the sealed chamber inside the laminated sheathing. The laminated sheathing forms the inside sealed chamber by overlapping and airtightly gluing the laminated films at the primary sealing part and also at the secondary sealing part that is perpendicular to the direction of this primary sealing part. The collector terminals connected to the positive electrode and to the negative electrode of the electricity generating element, are airtightly crimped at the secondary sealing part of the laminated sheathing and protrude outside the laminated sheathing. The primary sealing part of the laminated sheathing overlaps and glued the laminated film at the surface of the electricity generating element.

## Description

### BACKGROUND OF THE INVENTION

The present invention relates to a thin type battery using a laminated sheathing and particularly to a thin type battery with a sealing part of special structure.

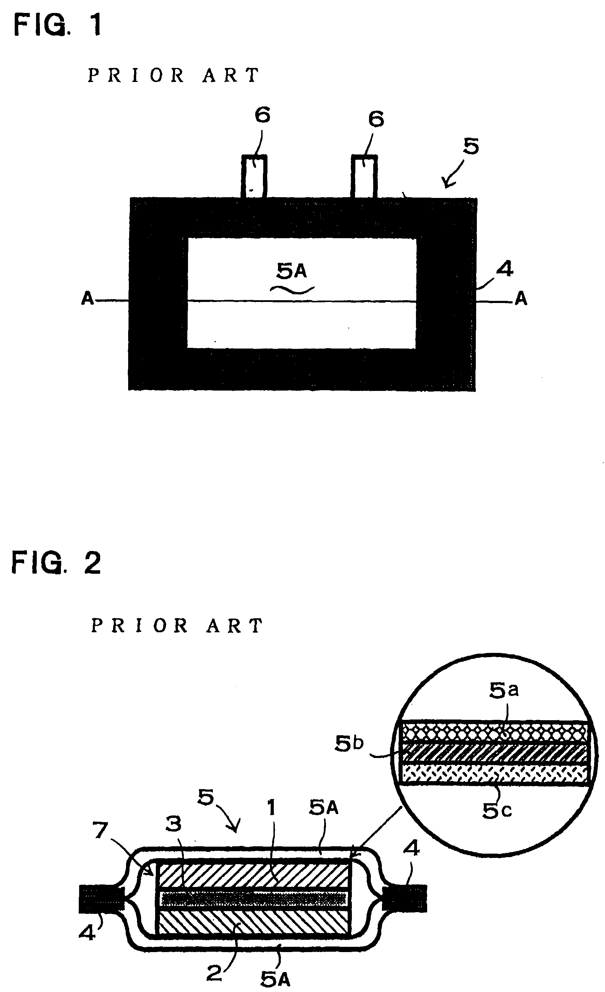

The thin type battery with laminated sheathing is shown in the plane view of the Fig. 1 and in the cross sectional view of the Fig. 2. The thin type battery of these figures has the electricity generating element 7 built-in with the laminated sheathing 5. The electrolytic layer 3 is provided between the positive electrode 1 and the negative electrode 2 of the electricity generating element 7. The outer circumference of the electricity generating element 7 of the thin type battery shown in these figures is the sealing part 4 of the laminated sheathing 5. The laminated sheathing 5 that airtightly seals the electricity generating element 7 overlaps the two laminated films 5A on both sides of the electricity generating element 7, laminating the outer circumference of the electricity generating element 7 and has a sealed up structure by heat weld of the overlapping part. At that time, the collector terminals 6 electrically connected to the positive electrode 1 and to the negative electrode 2 is pulled out outside the laminated sheathing 5. It is important that the laminated sheathing 5 totally seals airtightly the built-in electricity generating element 7. In particular, to prevent the introduction of the atmospheric moisture inside the sealed battery, it is important to seal in airtight condition. The here-under items 1 and 2 are important to prevent the introduction of moisture inside the laminated sheathing 5.

① To use a laminated film with a low moisture transmission rate.

② To seal in a moisture introduction free condition.

To lower the moisture transmission of the laminated film 5A, the laminated film 5A is composed of a polyester film 5a laminated on one face of the aluminum 5b and of a polypropylene film 5c laminated on the other side. Compared with a plastic film, the aluminum 5b has the excellent property to limit the transmission rate of the moisture. But, because the aluminum 5b cannot be heat welded, a polypropylene film 5c that can be heat welded, is laminated on the inner face of the aluminum 5b. To protect the aluminum 5b, the polyester film 5a is laminated on the outer face of the aluminum 5b.

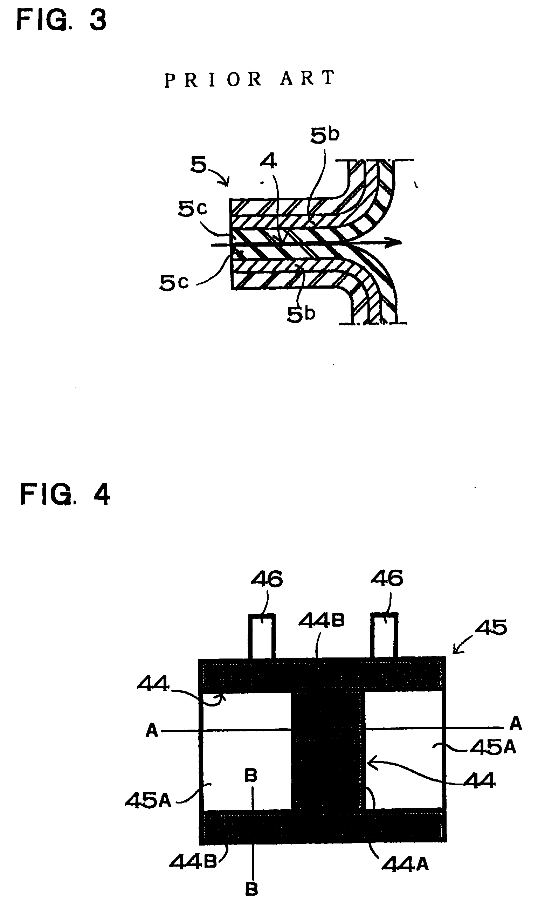

To prevent the introduction of the moisture through the sealing part 4, the laminated sheathing needs to augment the width of the sealing part 4. As shown in the cross-sectional view of the Fig. 3, is the width of the sealing part 4 is narrow, the moisture will enter the inside of the battery passing the polypropylene film 5c that is heat welded with the aluminum 5b. The sealing part 4 becomes a structure that cannot prevent the moisture transmission by the aluminum 5b. Becoming a structure with the polypropylene film 5c crimped between the aluminum 5b, the moisture penetrates inside passing the polypropylene film 5c. Compared with the aluminum 5b, the polypropylene film 5c has a fairly large moisture transmission rate. For this reason, the heat weld width of the polypropylene film 5c is made fairly larger, in other words, it is necessary to reduce the transmission of the moisture by lengthening the distance of the transmission of the moisture. For this reason, it is not possible to have a laminated sheathing 5 with a sealing part 4 width made narrower.

The thin type battery that has a sealing part having a broad width at the outer circumference of the electricity generating element, has the electricity generating element getting smaller compared with the external size. For this reason, the drawback is that the electric discharge capacity is reduced in opposition to the size of the outer shape. The causes of the lowering of the particularities of the battery is that to solve this drawback, the width of the sealing part is made narrower and the moisture etc.. came more easily penetrate inside passing the polypropylene film of the sealing part. This drawback reduced particularly the storage specificity of the battery.

The present invention has been developed with the scope to solve these drawbacks. The important scope of the present invention is to seal the sealing part of the laminated sheathing in the ideal condition and also to provide a thin type battery with laminated sheathing with a small global outer size and a large electric discharge capacity.

The above and further objects and features of the invention will more fully be apparent from the following detailed description with accompanying drawings.

### SUMMARY OF THE INVENTION

The thin type battery of the present invention is provided with the laminated sheathing, the electricity generating element and the collector terminals. The laminated sheathing composed of the laminated films overlapping and airtightly glued at the primary sealing part and the secondary sealing part that is protruding perpendicularly from the primary sealing part, forms the sealed chamber inside. The electricity generating element has the positive electrode and the negative electrode and is located inside the sealed chamber of the laminated sheathing. The collector terminals are connected to the positive electrode and to the negative electrode of the electricity generating element and are also airtightly crimped to the secondary sealing part of the laminated sheathing and are protruding outside the laminated sheathing. Furthermore, the primary sealing part of the laminated sheathing of the thin type battery, overlaps and glues the laminated films at the surface of the electricity generating element.

In the description of the present invention, the secondary sealing part refers to the sealing part that crimps airtightly the collector terminals of the electricity generating element and protrudes outwards and refers also to the sealing part that extends parallel to the former; the primary sealing part refers to the sealing part extending perpendicularly to this secondary sealing part.

The thin type battery of this structure has the particularity to not only seal the sealing part of the laminated sheathing in an ideal condition, but also to make the global outer shape smaller with a larger electric discharge capacity. This is because in the thin type battery of this structure, the sealing part heat depositing the laminated films is located at the surface of the electricity generating element. The sealing part located at the surface of the electricity generating element does not make the external shape of the battery bigger even if the width is made larger. Therefore, the thin type battery of this structure can have a sealing part width larger together with the electricity generating element made larger. Being able to make the width of the sealing part wider, allows to efficiently prevent the penetration of moisture etc. in the inside of the laminated sheathing and to reduce the loss of efficiency of the battery. Further, being able to make the electricity generating element larger allows to realize the particularity to augment the battery capacity.

### BRIEF DESCRIPTION OF THE DRAWINGS

Fig. 1 is a plane view of the thin type battery with laminated sheathing of prior art.

Fig. 2 is a cross-sectional view of the thin type battery with laminated sheathing shown in Fig. 1.

Fig. 3 is a cross-sectional view of the penetration condition of the moisture in the inside of the laminated sheathing of the thin type battery shown in the Fig. 2.

Fig. 4 is a plane view of the thin type battery with laminated sheathing of an embodiment of the present invention.

Fig. 5 is the A-A line cross-sectional view of the thin type battery shown in the Fig. 4.

Fig. 6 is the B-B line cross-sectional view of the thin type battery shown in the Fig. 4.

Fig. 7 is an oblique view showing the manufacturing process of the thin type battery shown in the Fig. 4.

Fig. 8 is a cross-sectional view of the collector terminal part of the thin type battery shown in the Fig. 4.

Fig. 9 is a plane view of the thin type battery with laminated sheathing of an other embodiment of the present invention.

Fig. 10 is the A-A line cross-sectional view of the thin type battery shown in the Fig. 9.

Fig. 11 is an oblique view showing the manufacturing process of the thin type battery shown in the Fig. 9.

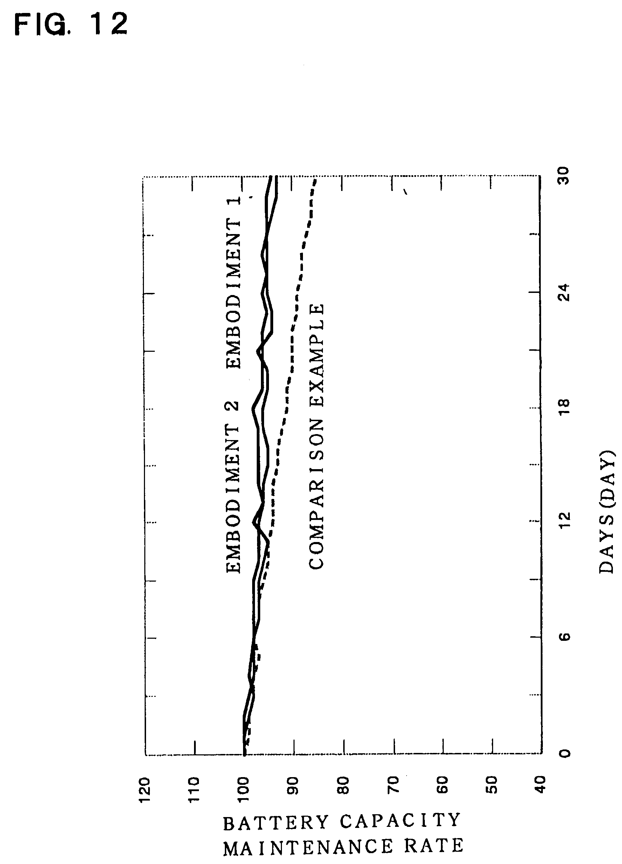

Fig. 12 is a graph showing the battery capacity maintenance rate.

Fig. 13 is a plane view and a cross-sectional view of the thin type battery with laminated sheathing of an other embodiment of the present invention.

Fig. 14 is a cross-sectional view of the collector terminal part of the thin type battery shown in the Fig. 13.

Fig. 15 is a plane view and a cross-sectional view of the thin type battery with laminated sheathing of an other embodiment of the present invention.

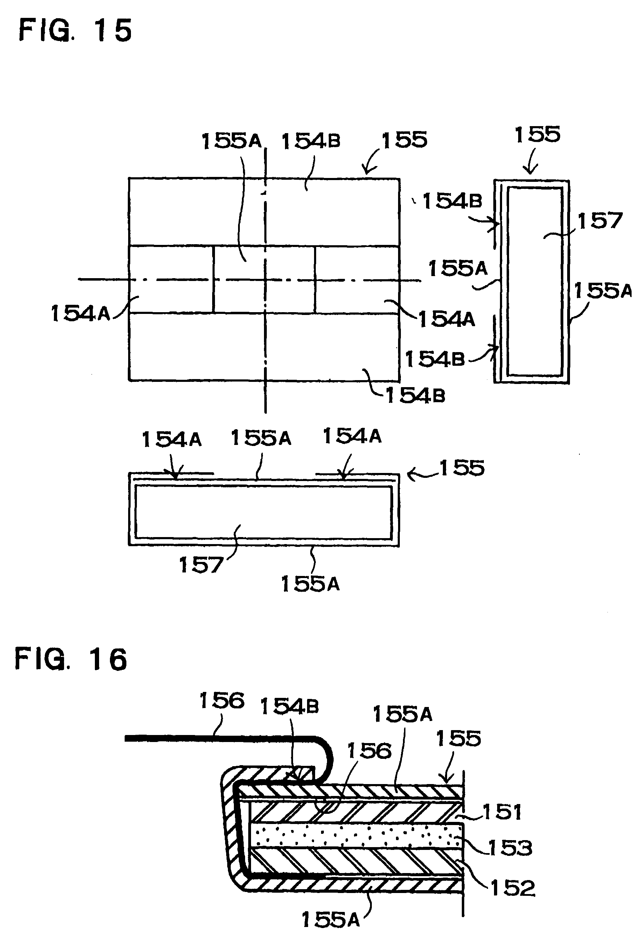

Fig, 16 is a cross-sectional view of the collector terminal part of the thin type battery shown in the Fig. 15.

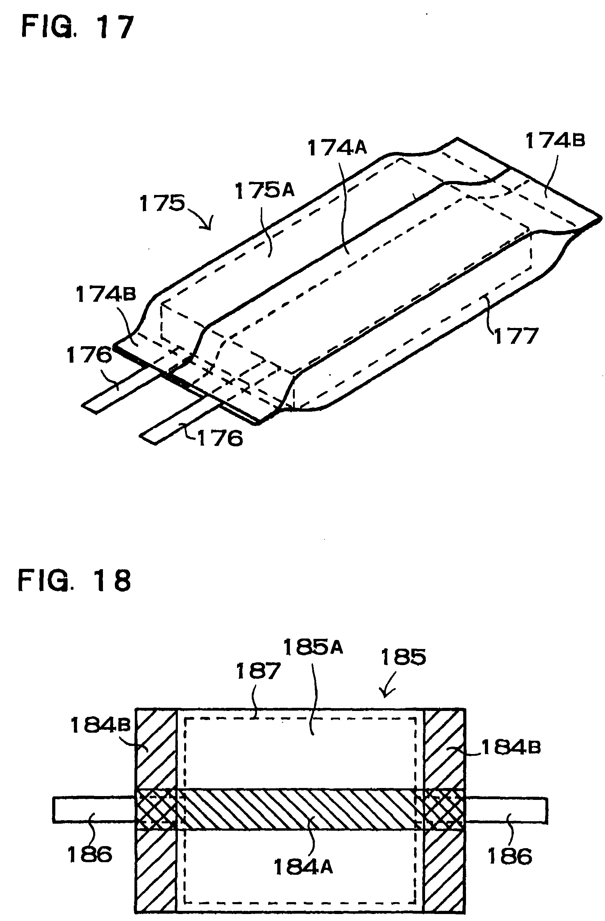

Fig. 17 is an oblique view of the thin type battery of an other embodiment of the present invention.

Fig. 18 is a plane view of the thin type battery of further an other embodiment of the present invention.

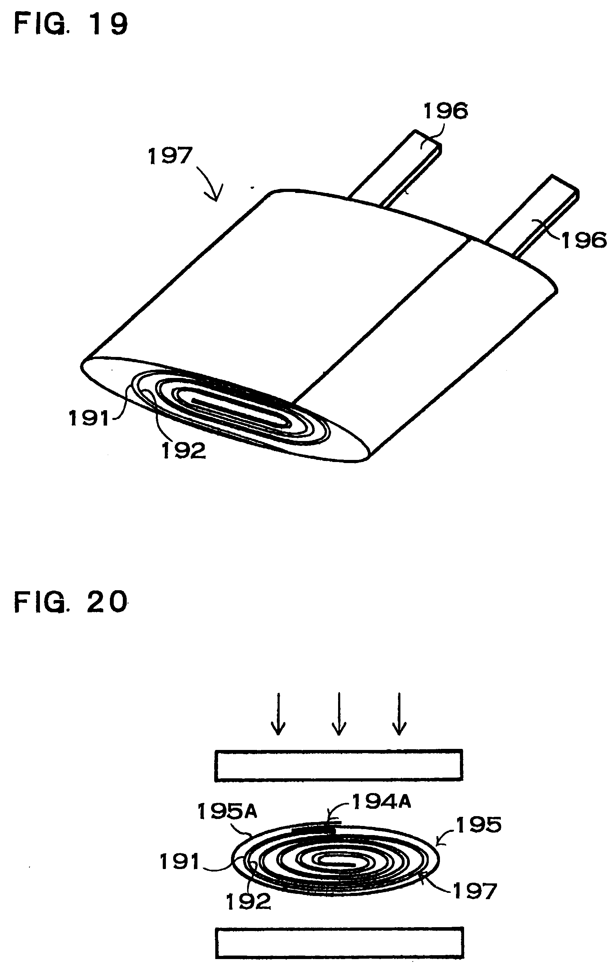

Fig. 19 is an oblique view showing an example of the electricity generating element built-in in the thin type battery.

Fig. 20 is a front view showing the pressed condition of the laminated sheathing with the built-in electricity generating element shown in the fig. 19.

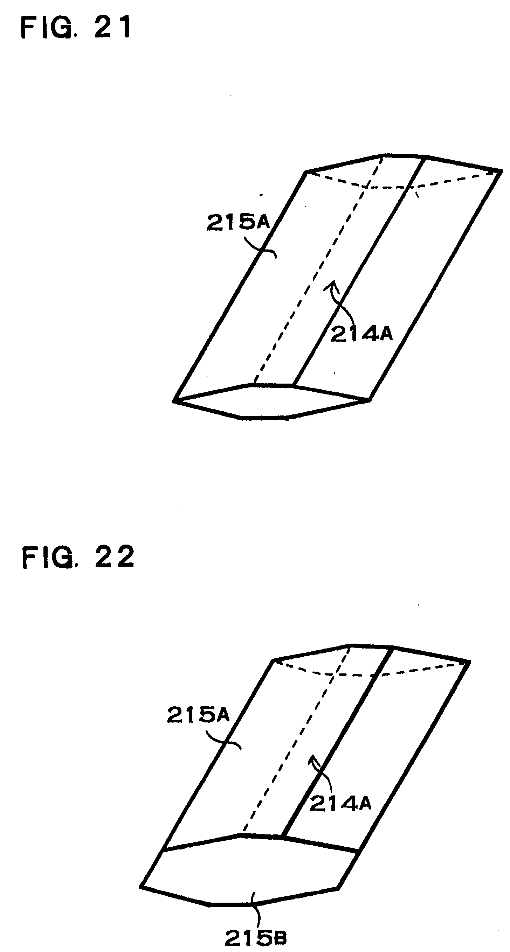

Fig. 21 is an oblique view showing the manufacturing process of the thin type battery of another embodiment of the present invention.

Fig. 22 is an oblique view showing the manufacturing process of the thin type battery of another embodiment of the present invention.

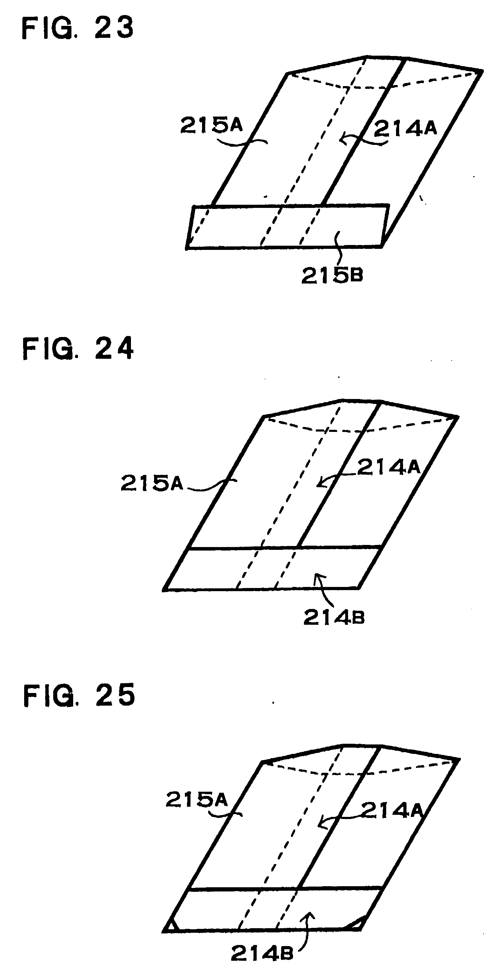

Fig. 23 is an oblique view showing the manufacturing process of the thin type battery of another embodiment of the present invention.

Fig. 24 is an oblique view showing the manufacturing process of the thin type battery of another embodiment of the present invention.

Fig. 25 is an oblique view showing the manufacturing process of the thin type battery of another embodiment of the present invention.

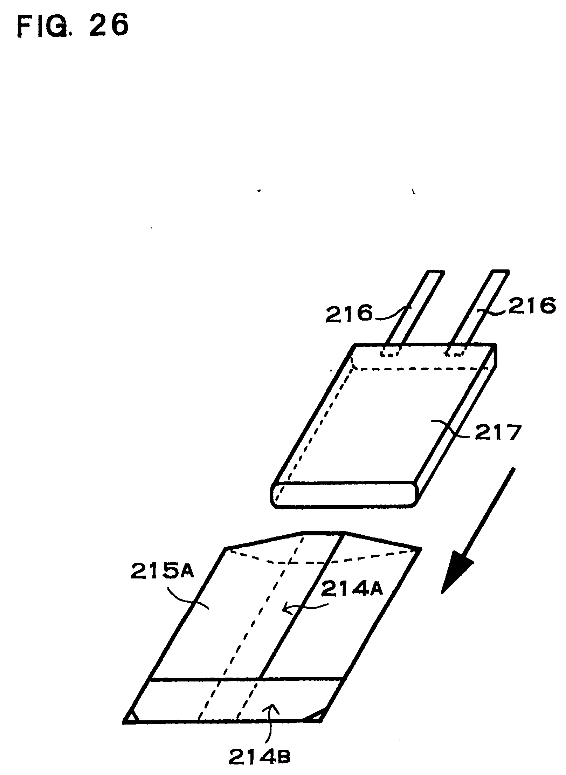

Fig. 26 is an oblique view showing the manufacturing process of the thin type battery of another embodiment of the present invention.

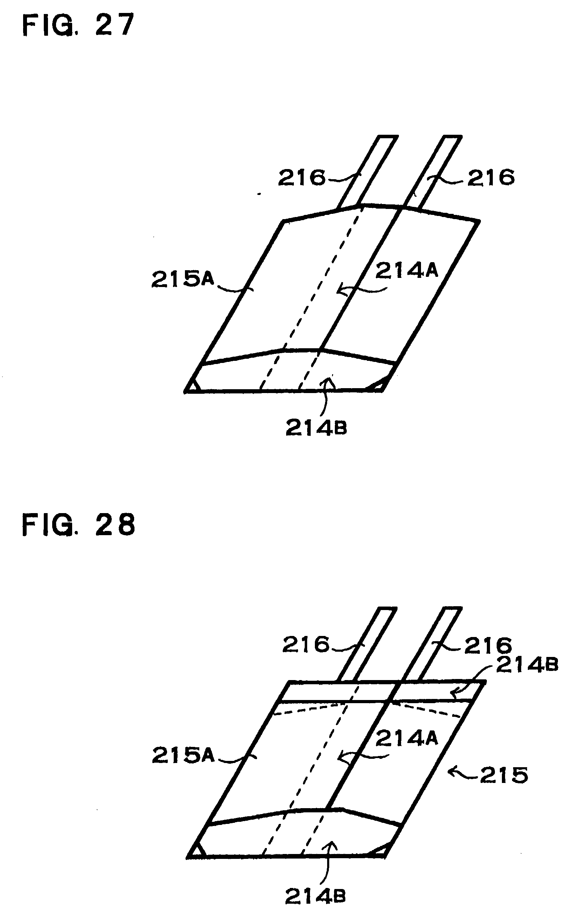

Fig. 27 is an oblique view showing the manufacturing process of the thin type battery of another embodiment of the present Invention.

Fig. 28 is an oblique view showing the manufacturing process of the thin type battery of another embodiment of the present invention.

### DETAILED DESCRIPTION OF THE DRAWINGS

The thin type battery shown in the Figs. 4 to 6 has the electricity generating element built-in the inside of the sealed chamber of the laminated sheathing 45. In these figures, 41 is the positive electrode, 42 is the negative electrode, 43 is the electrolytic layer. 44 is the sealing part of the laminated sheathing, 45 is the laminated sheathing and 48 is the collector terminals.

The thin type battery is a lithium polymer rechargeable battery or a lithium ion rechargeable battery. The lithium polymer rechargeable battery uses a solid electrolyte or a gel type electrolyte at normal temperature. The lithium polymer rechargeable battery uses the following combinations as to the positive electrode and the negative electrode.
Positive electrode... Manganese acid lithium
Negative electrode... Graphite type carbon
Positive electrode... Vanadium oxide
Negative electrode... Lithium alloy

The lithium ion rechargeable battery uses an electrolyte obtained from a solvent and a solute of LiPF₆ etc, the followings are used as to the positive and negative electrodes.
Positive electrode... Cobalt acid lithium
Negative electrode... Graphite type carbon
Positive electrode... Cobalt acid lithium
Negative electrode... Coke type carbon
Positive electrode... Nickel acid lithium
Negative electrode... Graphite type carbon
Positive electrode... Manganese acid lithium
Negative electrode...Graphite type carbon
Positive electrode...Cobalt acid lithium
Negative electrode... Tin amorphous oxide
the laminated sheathing 45 that is built-in with the electricity generating element 47 in a sealed structure, airtightly seals by heat weld the laminated film 45A by the sealing part 44. As shown in the magnified cross-sectional view 5, the laminated film 45A is a film that laminated the polypropylene films 45c on both sides of the aluminum foil 45b.

The laminated film 45A shown in this figure, has a three layer structure composed of the polypropylene film 45c, the aluminum foil 45b and the polypropylene film 45c; the polypropylene films 45c that are the same polypropylene films are laminated on both sides of the aluminum foil 45b.

### [Embodiment 1]

The thin type battery that is a lithium polymer rechargeable battery or a lithium ion rechargeable battery, is manufactured as follows.

In the thin type battery, the thickness of each layer of the laminated films 45A is as follows; the primary polypropylene film 45c located at the inner side of the laminated sheathing 45, is 50 µm, the aluminum foil 45b is 20 µm, the secondary polypropylene film 45c located at the external side of the laminated sheathing 45, is 80 µm. A metamerism of the polypropylene film is used to glue the interface between the aluminum foil 45b and the polypropylene films 45c.

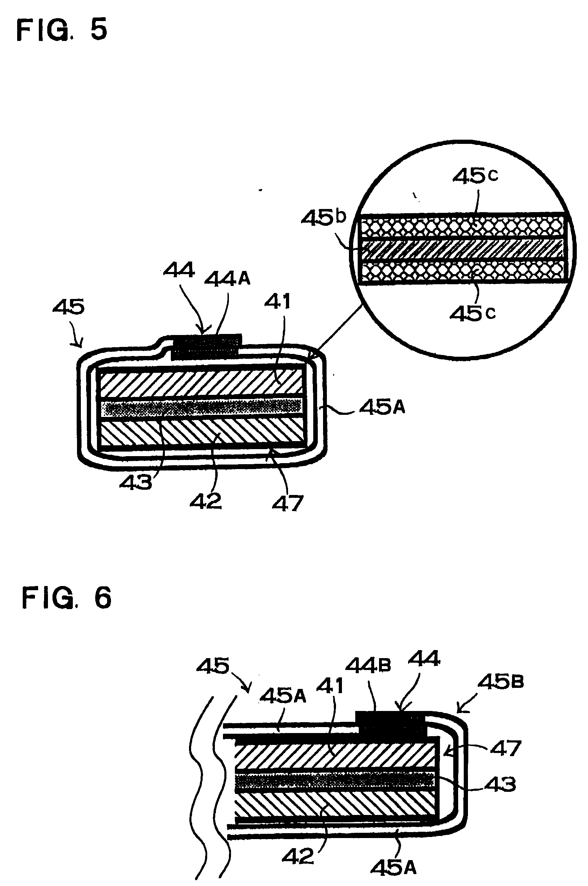

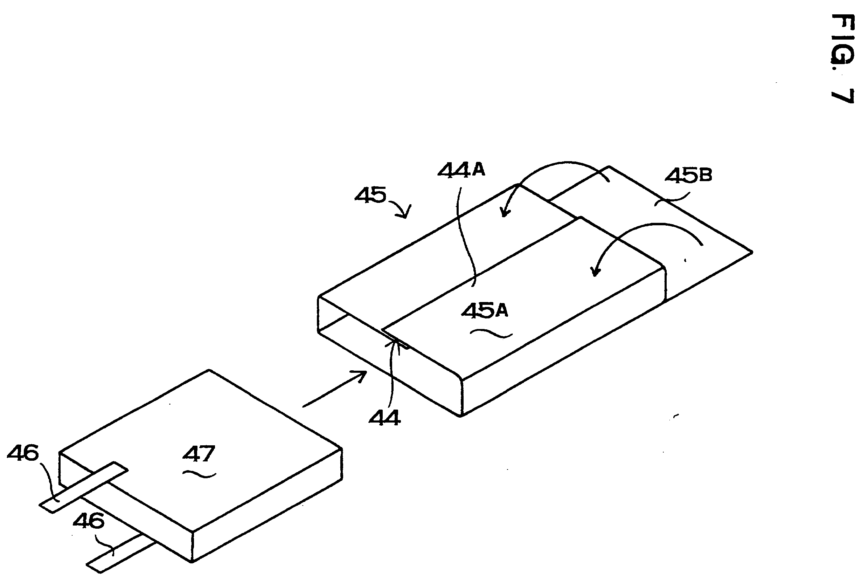

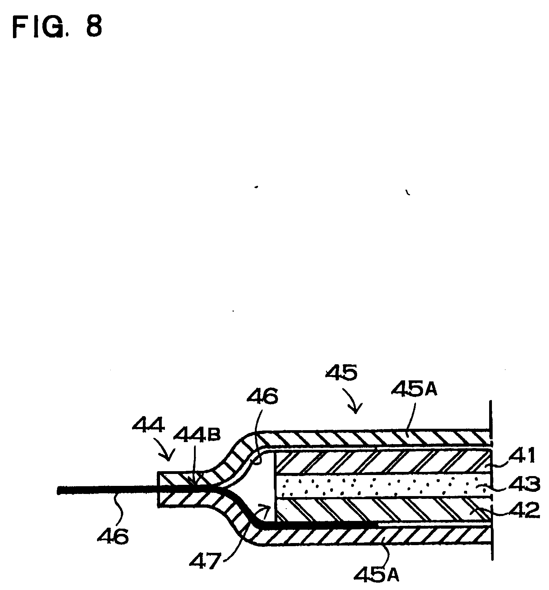

The thin type battery is manufactured like the laminated sheathing shown in the Figs. 4 to 6 according to the following process.
(1) As shown in the Fig. 5, the laminated film 45A is bent on both sides of the electricity generating element 47 and formed in a tubular shape, and both extremities are overlapped and heat welded at the surface of the electricity generating element 47. By this process, the part heat depositing the laminated film 45A becomes the primary sealing part 44A that connects the laminated film 45A in a tubular shape. The overlapping part of the laminated film 45A is heat welded without introducing the electricity generating element 47. Nevertheless the overlapping part that becomes the primary sealing part 44A can also be heat welded after having introduced the electricity generating element 47. The method of heat depositing the overlapping part before introducing the electricity generating element 47, allows both faces of the overlapping part to be crimped and heat welded by mean of the metallic mold of a high frequency induction heating apparatus. The method of heat depositing after having introduced the electricity generating element allow to press and heat deposit the overlapping part that has overlapped the laminated films 45A at the surface of the electricity generating element 47, while heating from the surface to the electricity generating element 47. by mean of the heated mold. The primary sealing part 44A is heat welded with a width set at 20 mm.
(2) Then, as shown in the Fig. 7, one extremity of the laminated film 45A that has been cylindrically heat welded, is folded and heat welded by mean of the metallic mold of the high frequency induction heating apparatus. This sealing part 44 becomes the secondary sealing part 44B of the side that does not crimp the collector terminals 46. At the secondary sealing part 44B that does not crimp the collector terminals 46, the edge of one side of the laminated film 45A that is cylindrically connected, is cut, the other flap 45B that has not been cut is overlapped and folded at 180 degrees so that it fits tightly the surface of the cut off side of the laminated film 45A, the overlapping part is then heat welded and sealed in the shape of a bag. The width of the secondary sealing part 44B is set at 20 mm. When heat depositing the flap 45B that is bent at 180 degrees, a thin metallic mold is introduced inside the laminated film 45A that has been connected in a tubular shape to prevent the heat weld of the laminated film 45A that is located at both sides of the electricity generating element. The overlapping part is crimped and heat welded in the heated and pressed condition, by this mold and also by the external mold pressing the flap 45B.
(3) The electricity generating element 47 that has been mounted in advance in an argon atmosphere is introduced into the laminated film 45A with the overlapping part heat welded in the shape of a bag (here-under called pouch). The external dimensions of the electricity generating element are about 80 x 30 mm. The collector terminals 46 of the positive electrode and the negative electrode are crimped between the laminated films 45A, as shown in the Fig. 8 and the laminated film 45A of both sides of the electricity generating element 47 are heat welded by the overlapping part. The collector terminals 46 are crimped between two layers of the laminated films 45A and protrude outwards. The width of the secondary sealing part 44B crimping and heat depositing the collector terminals 46 is set at 10 mm.

The overall thickness of the thin type battery manufactured by the here-over process, is set at 1.5 mm.

### [Embodiment 2]

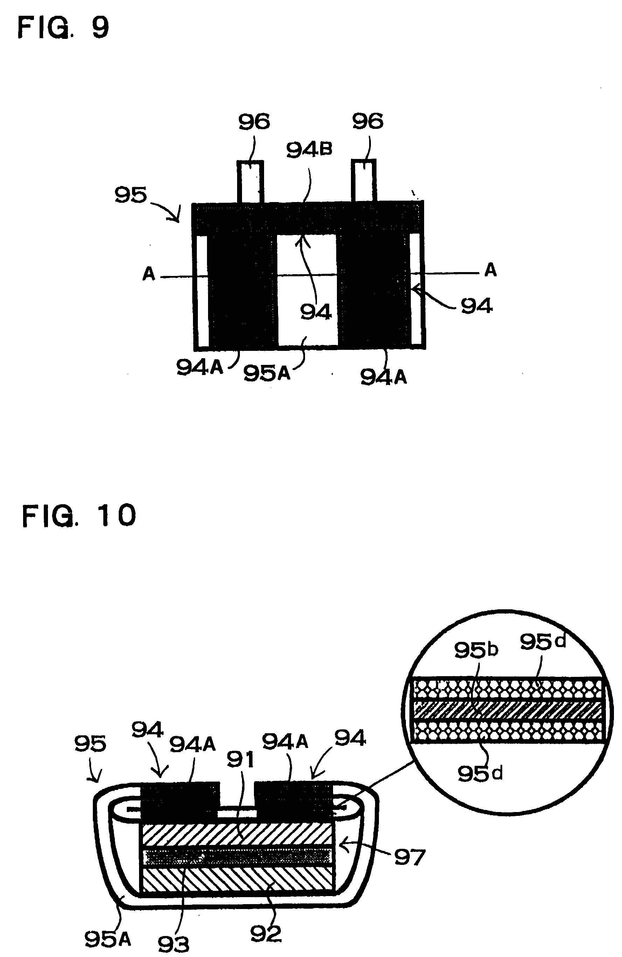

The thin type battery shown in the Fig. 9 and Fig. 10, uses the same electricity generating element 97 built-in the laminated sheathing 95 as in the embodiment 1. In these figures, the positive electrode is numbered 91, the negative electrode 92, the electrolytic layer 93, and 94 the sealing part of the laminated film 95A. The laminated film 95A has a three layer structure composed of the polyethylene film 95d, the aluminum foil 95b and the polyethylene film 95d. The polyethylene films 95d laminated on both sides of the aluminum foil 95b, are made of the same material. In this laminated film 95A, the primary polyethylene film 95d (inner side) is 30 µm thick, the aluminum foil 95b is 9 µm thick and the secondary polyethylene film 95d (external side) is 80 µm thick. A polyethylene metamerism is used at the glued interface.

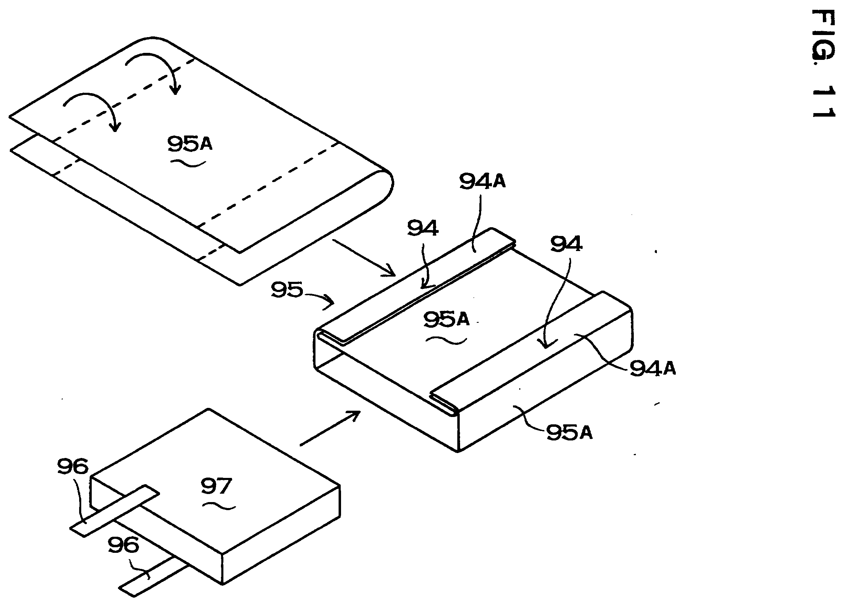

The thin type battery shown in the Fig. 9 and Fig. 10 is manufactured as follows.
(1) As shown in the Fig. 11, after having folded in two layers and after having folded the overlapping parts of these extremities at the position that will come on the upper face of the electricity generating element 97, the three layer laminated film 95A is made in the shape of a pouch by heat depositing the overlapping part that is overlapped, by mean of the metallic mold of a high frequency induction heating apparatus. The width of the heat welded primary sealing part 94A is 20 mm. When heat depositing the overlapping part bent at the upper face of the electricity generating element 97, a thin metallic mold is introduced where the electricity generating element 97 is introduced, to prevent heat depositing of the laminated film 95A located on both sided of the electricity generating element 97.
(2) Then the process is the same as the embodiment 1 (3), that is to say that the electricity generating element 97 that has been mounted in advance in an argon atmosphere is introduced into the pouch connected in the shape of bag, the collector terminals of the positive electrode 91 and the negative electrode 92 are crimped between the laminated films 95A, and the laminated films 95A on both faces of the electricity generating element 97 are heat welded at the overlapping part. The width of the secondary sealing part 94B crimping and heat depositing the collector terminals 96, is 10 mm.

The overall thickness of the thin type battery manufactured in the here-over conditions, is 1.7 mm.

### [Comparison example]

The thin type battery is manufactured, as shown in the Fig. 1 and Fig. 2, by heat weld of the laminated films 5A at the outer circumference of the electricity generating element 7. The electricity generating element 7 is the same as the one of the embodiment 1. The three layer structure of polyester film 5a, aluminum foil 5b and polypropylene film 5c are used as to the laminated film 5A with a 60 µm thick polypropylene film 5c, a 9 µm thick aluminum foil 5b and a 20 µm thick polyester film 5a. A urethane type glue is used to glue the interface. This laminated film 5A is heat welded so that the polyester film 5a is located outwards. The width of the sealing part 4 heat depositing the overlapping part of the laminated film 5A around the electricity generating element 7, is 10 mm. The electricity generating element 7 mounted in advance in an argon atmosphere is introduce between the laminated film 5A, then the laminated film 5A is heat welded around the electricity generating element 7 realizing the thin type battery. The thickness of the completed thin type battery was 1.5 mm.

The diagram 12 shows the measurement of the battery capacity maintenance rate of the thin type battery that has been manufactured as a test in the embodiments and the comparison. But, this diagram compares the characteristics of the embodiments and the comparison of the thin type battery that is a lithium polymer rechargeable battery. From this diagram, the thin type battery of the embodiments 1 and 2 of the present invention compared with the thin type battery of the comparison has a battery capacity maintenance rate that has remarkably improved. But, the maintenance rate of the battery capacity of this diagram measured when the test battery is kept still at 60 degrees, shows a proportional reduction of the battery capacity. The thin type battery of lithium ion rechargeable battery type shows the same tendency as the diagram 12.

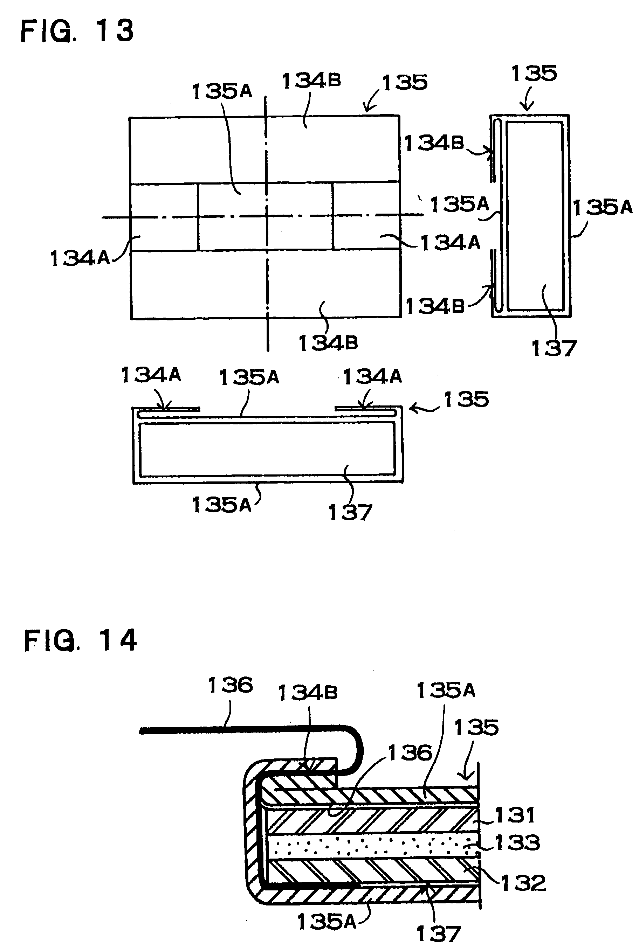

The thin type battery of the laminated sheathing of the present invention does not specify the structure of the sealing part of the laminated sheathing in the here-over mentioned embodiments. As shown in the Fig. 13, the laminated sheathing overlaps and heat deposit the laminated film 135A on the entire circumference of the electricity generating element 137, and it is possible to have a structure obtained by folding and gluing the 4 heat welded overlapped parts on the upper face of the electricity generating element 137. The thin type battery shown in this figure has the primary sealing part 134A extending vertically according to this figure and the secondary sealing part 134B extending right-left, around the electricity generating element 137. In the thin type battery of this structure, the terminal collectors 136 are bent together with the overlapping part that has been heat welded and protrude outwards, as shown in the Fig. 14. In this figure. the positive electrode is numbered 131, the negative electrode 132, the electrolytic layer 133, and 134 the laminated sheathing.

Furthermore, as shown in the Fig. 15, in the thin type battery of the present invention, it is also possible to fold and heat deposit the laminated film 155A overlapping at the lower face of the electricity generating element 157 at the surface of the laminated film 155A overlapping at the upper face of the electricity generating element 157. The thin type battery shown in this figure has the primary sealing part 154A extending vertically in this figure, and the secondary sealing part 154B extending right-left, around the electricity generating element 157. As shown in the Fig. 16, in the thin type battery of this structure, the collector terminals 156 protrude outwards between the laminated films 155A overlapping vertically the electricity generating element 157. In this figure, the positive electrode is numbered 151, the negative electrode 152, the electrolytic layer 153, and the laminated sheathing 155.

As shown in the Fig. 13 and Fig. 10, in the structure where the heat welded overlapping part of the laminated film is folded on the upper face of the electricity generating element and glued to the upper face of the laminated film, it is possible to glue by heat weld or to glue using an adhesive substance, the heat welded laminated film and the laminated film of the surface of the electricity generating element. Especially, even if the gluing of the heat welded laminated film and of the laminated film of the surface of the electricity generating element is insufficient, it can be simply glued because the moisture and other, do not enter the inside of the laminated sheathing.

Furthermore, in the thin type battery of the present invention shown in the Fig. 17, it is possible to set the primary sealing part 174A of the laminated sheathing 175 at the surface of the electricity generating element 177 and to set the secondary sealing part 174B protruding out of the both extremities of the electricity generating element 177. The thin type battery of this type is manufactured according to the here-under process.
(1) The laminated film 175A is bent at both sides of the electricity generating element 177 forming a tubular shape and overlapped at the surface of the electricity generating element 177, and like the embodiment 1, the overlapping part is heat welded forming the primary sealing part 174A.
(2) Then the electricity generating element 177 mounted that has been mounted in advance in an argon atmosphere is afterwards introduced into the laminated film 175A that is heat welded in a cylindrical shape. The same electricity generating element 177 is used as to the embodiment 1. The laminated film 175A is deposited so that the collector terminals 176 of the positive electrode and the negative electrode are crimped by one of the secondary sealing parts 174B. Only the secondary sealing part 174B that crimps the collector terminals 176 is deposited and the secondary sealing part 174B that does not crimp the collector terminals 176 is not deposited. The secondary sealing part 174 is mounted so that it protrudes from the electricity generating element 177.
   When the thin type battery is a lithium ion rechargeable battery, after having crimped the collector terminals to one of the secondary sealing parts, the electrolyte is filled up into the pouch. When crimping the collector terminals to the secondary sealing part, the electrolyte is not filled up. For this reason, there is no risk of miss-gluing due to the electrolyte when crimping the collector terminals by the secondary sealing part.
(3) By depositing the secondary sealing part 174B that does not crimp the collector terminals 176, the laminated film 175A is airtightly sealed. In the case of the lithium ion rechargeable battery, it happens that the electrolyte impedes the depositing of the secondary sealing part. To prevent this drawback, the laminated film is deposited after having expelled the electrolyte that was spilled on the depositing area. The electrolyte of the depositing area is wiped with a cloth or a rag, or is expelled by blowing a pressurized gas like air etc..

The collector terminals 176 of the positive electrode and the negative electrode of the thin type battery of the here-over embodiment are crimped in one of the secondary sealing parts 174B and protrude outwards. As shown in the Fig. 18, the collector terminals of the positive electrode and the negative electrode can separately protrude from both of the secondary sealing parts 184B. In this figure, 185 refers to the laminated sheathing, 185A to the laminated film, 184A to the primary sealing part, 184B to the secondary sealing part. 186 to the collector terminals, 187 to the electricity generating element.

Furthermore, the electricity generating element to be introduced into the sealed chamber of the laminated sheathing, can also have the structure of flat positive and negative electrodes overlapping in plural layers, but as shown in the Fig. 19, the overlapping materials of the positive electrode 191 and the negative electrode 192 can also have the structure of spiral shape roll. The collector terminals 196 are electrically connected to the positive electrode 191 and to the negative electrode 192. As shown in the Fig. 20, the thin type battery that can be built-in with the spiral shape electricity generating element 197, includes the electricity generating element 197 inside the laminated sheathing 195 connected in a tubular shape by depositing the laminated film 195A at the primary sealing part 194A, and can also be pressed from both sides to obtain a thin form.

Furthermore, as shown in the Figs. 21 to 28, the thin type battery of the present invention can be manufactured by the following process.
(1) The laminated film 215A is bent on both sides in a tubular shape and both extremities are overlapped and the overlapping part is heat welded as shown in the Fig. 21. A laminated film 215A with the same structure as in the embodiment 2, is used. In this process, the part heat depositing the laminated film 215A is the primary sealing part 214A connecting the laminated film 215A in a tubular shape.
(2) As shown in the Fig. 22, having cut one of the edges of the laminated film 215A connected in a tubular shape, the other edge that is not cut become the flap 215B.
(3) As shown in the Fig. 23. the flap 215B is folded at 180 degrees and overlapped to tightly fit the surface of the laminated film 215A of the cut side.
(4) As shown in the Fig. 24. the overlapping part is heat welded and sealed in the shape of a bag. At this time, a thin metallic mold is inserted into the laminated film 215A that has been connected in a tubular shape, to prevent heat depositing of the laminated film 215A located at the front and back faces. The overlapping part is crimped in the pressed and heated condition by mean of this metallic mold and the outer metallic mold pressing the flap 215B, and then heat welded. By this process, the heat welded part becomes the secondary sealing part 214B of the side that does not crimp the collector terminals.
(5) Taking the thin metallic mold out of the inner part of the tubular shape laminated film 215A. as shown in the Fig. 25, the two corners of the folded and deposited secondary sealing part 214B, are heat welded. The laminated film 215A located at the front and back faces is heat welded. This process is performed to reinforce the corners of the folded and deposited secondary sealing part 214B and also to tightly seal this part to prevent the electrolyte to be filled to flow outside from here.
(6) As shown in the Fig. 26 and in the Fig. 27, the electricity generating element 217 mounted in advance in an argon atmosphere, is inserted into the pouch connected like a pocket. In these conditions, the primary sealing part 214A is located at the surface of the electricity generating element 217 and the collector terminals 216 protrude from the opening part of the pouch.
(7) After having filled the electrolyte into the pouch, the collector terminals 216 are, as shown in the Fig. 28, crimped between the two laminated films 215A that are positioned on both faces of the electricity generating element, and the overlapping part'is heat welded. The heat welded part becomes the secondary sealing part 214B of the side crimping the collector terminals 216. The laminated film 214A is deposited after having wiped out the electrolyte spilled on the part to be deposited. The collector terminals 216 are pulled out after having crimped the 2 laminated films 215A.

The thin type battery manufactured according to the here-over process, can realize a globally thin laminated sheathing with a sealed tubular shape. Furthermore, it is characterized in that the electrolyte to be poured in is surely prevented to flow outside from the folded part of the laminated film 215A because the corners of the secondary sealing part 214B of the side that does not crimp the collector terminals is heat welded.

Furthermore. in the thin type battery of the present invention, the inner face of the secondary sealing part that crimps the collector terminals, can also be airtightly sealed by spreading an adhesive material.

The secondary sealing part that is to be glued by mean of an adhesive material, has the particularity to allow gluing without any gap because the adhesive material fills up the interval between the collector terminals and the laminated film.

As this invention may be embodied in several forms without departing from the spirit of essential characteristics thereof, the present embodiment is therefore illustrative and not restrictive, since the scope of the invention is defined by the appended claims rather than by the description preceding them, and all changes that fall within meets and bounds of the claims, or equivalence of such meets and bounds thereof are therefore intended to be embraced by the claims.

## Claims

1. A thin type battery comprising :
a laminated sheathing comprising a laminated film configured to form an airtight sealed chamber;
an electricity generating element mounted in said sealed chamber and having a positive electrode and a negative electrode;
wherein said laminated film is overlapped on and adhered to itself at a surface of said electricity generating element to form an elongated primary sealing part and an elongated secondary sealing part extending perpendicular to said elongated primary sealing part; and
wherein collector terminals are connected to said positive electrode and said negative electrode, respectively, of said electricity generating element, protrude to an outside of said laminated sheathing, and at least one of said collector terminals is crimped in an airtight manner at said secondary sealing part of said laminated film.

2. A thin type battery with a laminated sheathing as recited in claim 1 wherein the primary sealing part is set in one line at the surface of the electricity generating element.

3. A thin type battery with a laminated sheathing as recited in claim 2 wherein the primary sealing part is set at almost the center of the surface of the electricity generating element.

4. A thin type battery with a laminated sheathing as recited in claim 1 wherein the primary sealing parts are set on both sides of the electricity generating element.

5. A thin type battery with a laminated sheathing as recited in claim 1 wherein the outer shape of the laminated sheathing is rectangular with the primary sealing part longer than the secondary sealing part.

6. A thin type battery with a laminated sheathing as recited in claim 1 wherein the secondary sealing part is set at both extremities of the laminated sheathing with the secondary sealing part protruding outside the electricity generating element.

7. A thin type battery with a laminated sheathing as recited in claim 1 wherein the positive and negative electrodes of the collector terminals are crimped at one of the secondary sealing parts and protruding outside the laminated sheathing.

8. A thin type battery with a laminated sheathing as recited in claim 7 wherein the secondary sealing part that crimps the collector terminals and also the secondary sealing part that does not crimp the collector terminals, are both protruding outside the electricity generating element.

9. A thin type battery with a laminated sheathing as recited in claim 7 wherein the secondary sealing part that crimps the collector terminals is protruding outside the electricity generating element, and the secondary sealing part that does not crimp the collector terminals is folded and overlapped at the surface of the electricity generating element.

10. A thin type battery with a laminated sheathing as recited in claim 9 wherein the corners of the secondary sealing part to be folded and overlapped on the surface of the electricity generating element, are heat welded.

11. A thin type battery with a laminated sheathing as recited in claim 1 wherein the collector terminals of the positive electrode and the negative electrode are separately crimped and protruding outside of both the secondary sealing parts of the laminated sheathing.

12. A thin type battery with a laminated sheathing as recited in claim 1 wherein the laminated films are heat welded at the sealing part because aluminum is laminated and glued between the thermally deformable plastic films and because the plastic films that are to be laminated and glued on both sides of the aluminum, are the same plastic films.

13. A thin type battery with a laminated sheathing as recited in claim 1 wherein adhesive material is filled between the collector terminals and the laminated films.

14. A thin type battery with a laminated sheathing as recited in claim 1 wherein the thin type battery is a lithium polymer rechargeable battery.

15. A thin type battery with a laminated sheathing as recited in claim 1 wherein the thin type battery is a lithium ion rechargeable battery.

16. A thin type battery with a laminated sheathing as recited in claim 1 wherein the electricity generating element laminates the positive electrode and the negative electrode in a flat manner.

17. A thin type battery with a laminated sheathing as recited in claim 1 wherein the electricity generating element is a spiral shape roll laminating the positive electrode and the negative electrode.
